# EUROPÄISCHE PATENTSCHRIFT

(11) **EP 1 948 551 B1**
(45) Veröffentlichungstag und Bekanntmachung des Hinweises auf die Patenterteilung: **26.07.2017**
(21) Anmeldenummer: 06805446.9
(22) Anmeldetag: 12.10.2006
(51) Int. Cl.: B66C 23/36, B66C 23/62, B62D 55/065, B62D 21/18

(54) **MOBILER GROSSKRAN**
LARGE MOBILE CRANE
GRANDE GRUE MOBILE

(30) Priorität: 17.11.2005 DE 102005055694; 29.03.2006 DE 102006015307
(43) Veröffentlichungstag der Anmeldung: 30.07.2008
(73) Patentinhaber: Terex Global GmbH, 8200 Schaffhausen (CH)
(72) Erfinder: ZOLLONDZ, Rüdiger,, 66500 Hornbach (DE); WECKBECKER, Alfons, 66482 Zweibrücken (DE); KÖSTER, Fritz-Botho, 67806 Rockenhausen (DE); KARP, Günter, 66919 Herschberg (DE); FRANZEN, Hans-Peter, 66484 Walshausen (DE)
(74) Vertreter: Moser Götze & Partner Patentanwälte mbB
(86) Internationale Anmeldenummer: PCT/DE2006/001843
(87) Internationale Veröffentlichungsnummer: WO 2007/056969

(56) Entgegenhaltungen:
- WO-A-2005/030632
- DE-A1- 19 914 195
- DE-U1- 20 020 953
- DE-U1-202005 017 362
- GB-A- 2 031 824
- US-A- 3 680 720
- US-B1- 6 588 521

## Beschreibung

Die Erfindung betrifft einen mobilen Großkran gemäß dem Oberbegriff des Patentanspruchs 1.

Zum Heben außergewöhnlich schwerer Lasten oberhalb der am Markt gängigen, in großen Stückzahlen vorhandenen Mobilkrankonzepte sind verschiedene Lösungen bekannt:
So ist es möglich, mit den konstruktiv zur Verfügung stehenden und bewährten Maschinenelementen und Materialien jederzeit einen sehr großen Gittermastraupenkran zu bauen. Durch die erforderliche Größe der einzelnen Komponenten würden jedoch erhebliche Probleme bei der Herstellung, insbesondere von Gussteilen wie Bodenplatten und Seiltrommeln sowie von Hydraulikbauteilen entstehen. Es würden zum Teil technologische, auf jeden Fall aber wirtschaftliche Grenzen erreicht und die dabei erzielten Großkrane wären allesamt schwer von einer zur anderen Einsatzstelle umsetzbare Einzelstücke. Auch im Transport ist die Handhabung sowie die Straßen- und Brückengängigkeit der großen Teile sehr problematisch. Eine alternativ in Frage kommende Teilung der einzelnen Grundkomponenten würde zusätzliche, verhältnismäßig hohe Kosten verursachen. Insgesamt würde ein solches Großgerät sehr teuer und erfahrungsgemäß am Markt einen Prototyp darstellen.

Für große Lasten können andererseits Ringlift-Krane, wie beispielsweise aus DE 199 14 195 A1 bekannt, eingesetzt werden. Diese haben in der Regel große oder doppelte Auslegersysteme (parallel oder A-förmig angeordnet), die über eine kreisförmige Schienenbahn auf dem Boden abgestützt sind. Zu diesem Krantyp existieren mittlerweile mehrere Patente wie z.B. US 4,103,783 und US 4,196,816. Der Vorteil der Ringliftkrane ist das Erzielen weitaus höherer Lastmomente im Vergleich zum Raupenkran. Nachtöilig ist, dass Ringliftkrane nicht mit anhängender Last und nur durch einen erheblichen Zusatzaufwand ohne Last verfahren werden können und dass sie in der Regel nur wenige Komponenten von Serienkranen nutzen können. Sie müssen also in der Regel vor Ort aufgebaut werden und blockieren den Fortgang der Bauarbeiten während der langwierigen Auf- und Abbauphasen.

Weitere Krane sind beispielsweise bekannt aus US 6,588,521 B1, aus GB 2 031 824 A, aus DE 20 2005 017 362 U1, aus WO 2005/030 632 A1, aus DE 200 20 953 U1 und aus US 3,680,720.

Bekannt sind auch sogenannte Derrick-Krane, bei denen einem Ausleger ein Gegenausleger zugeordnet ist, wobei beide auf dem Oberwagen eines mobilen Unterwagens oder auf einem nicht ortsveränderlichen Fundament angeordnet sind.

Nachteilig sind die extrem großen Abmessungen aller dieser Geräte, die wie schon zuvor dargestellt, beim Transport und bei der Montage / Demontage Probleme bereiten sowie die aufgrund der auf die Größe der Geräte bezogene geringe Spurweite der Raupenfahrwerke, verhältnismäßig niedrige Seitenstabilität (problematisch insbesondere bei Lasten mit großer Windangriffsfläche).

Es ist daher die Aufgabe der vorliegenden Erfindung die Nachteile der bekannten Lösungen zu eliminieren und dabei das Investitionsvolumen für die einsatzoptimierte Gestaltung und Installation von Großkranen unterschiedlichster Ausprägung und Eigenschaften zu verringern.

Gelöst wird diese Aufgabe erfindungsgemäß mit den Merkmalen des Patentanspruchs 1. Vorzugsweise Ausgestaltungen ergeben sich aus den Unteransprüchen.

Der Erfindung liegt dabei der Kerngedanke zugrunde, einen mobilen Großkran zu schaffen, der variabel ist, d.h. es soll ein dem Bedarf anpassbarer Kran aufbaubar sein. Dieses gelingt im Wesentlichen dadurch, dass soweit wie möglich Teile von vorhandenen Serienkranen in einer günstigen Kombination mit Erweiterungsteilen in unterschiedlichen Variationen zur Erzielung großer und sehr großer Krankonstellationen verwendet werden. Nach einer besonders vorteilhaften Ausgestaltung weist der Kran bei einem Derrick Aufbau eine doppelte Auslegeranordnung und eine doppelte Gegenauslegeranordnung auf.

Die beiden nebeneinander angeordneten Ausleger sind dabei vorzugsweise momentensteif miteinander verbunden.

Durch diese Anordnung gelingt eine wesentlich vergrößerte Lastaufnahme, wobei aber die Mobilität des Grundgeräts nicht eingeschränkt wird.
Bei der Variation des Kranaufbaus kommen so weit es möglich ist Serienteile zur Anwendung. Dies gilt nicht nur für die Last aufnehmenden Teile, sondern auch für die der Mobilität dienenden Teile.

So wird durch den modularen Aufbau des Raupenfahrwerks bzw. der Raupenträger schnell und einfach eine Vergrößerung der Standfläche erreicht, und zwar ebenfalls durch die Verwendung von Serienteilen.

Die Veränderung der Lastaufnahmemöglichkeiten wird noch besonders verbessert, wenn auch eine vereinfachte Anpassbarkeit des zum Einsatz kommenden Gegengewichtes möglich ist. Mit anderen Worten soll ohne große Probleme sowohl eine Anpassung an größere Lasten, wie auch eine Verringerung möglich sein, im Sinne der gewünschten Variabilität. Dieses wird erreicht durch die Aufteilung des Gegengewichtes in eine verfahrbare und eine nicht verfahrbare Gegengewichtskomponente.

Diese Aufteilung ist Gegenstand des DE-Patentes (Patentanmeldung 10 2005 055 693.0).

Zum besseren Verständnis soll die Erfindung nachfolgend unter Bezug auf die Zeichnungen erläutert werden:
Dabei zeigt:

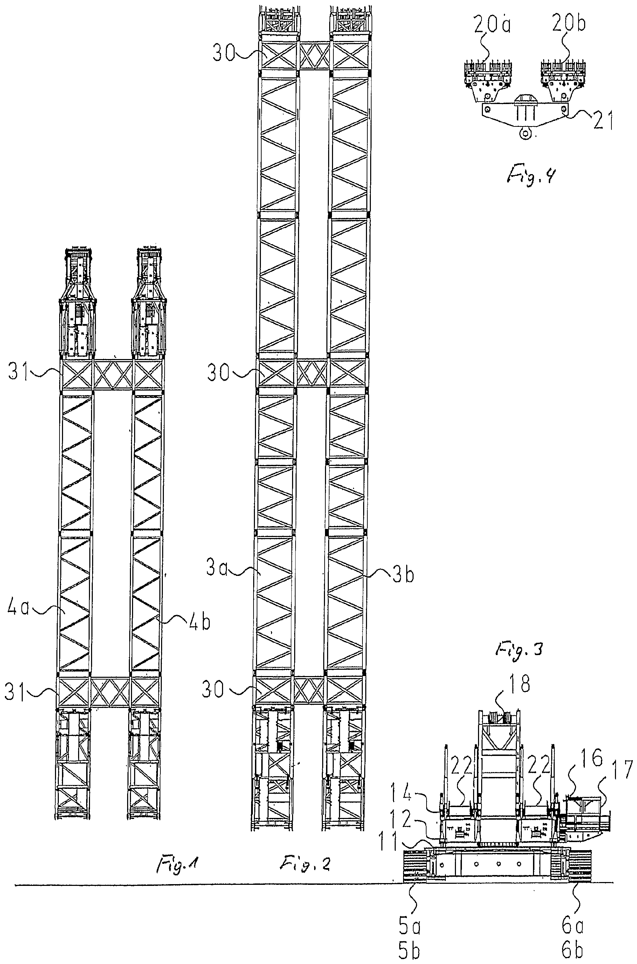

   Fig. 1 und 2 eine Teilansicht einer doppelten Ausleger-Gegenausleger-Anordnung,
   Fig. 3 das Raupenfahrwerk mit dem Oberwagen,
   Fig. 4 die Kombinations-Unterflasche,

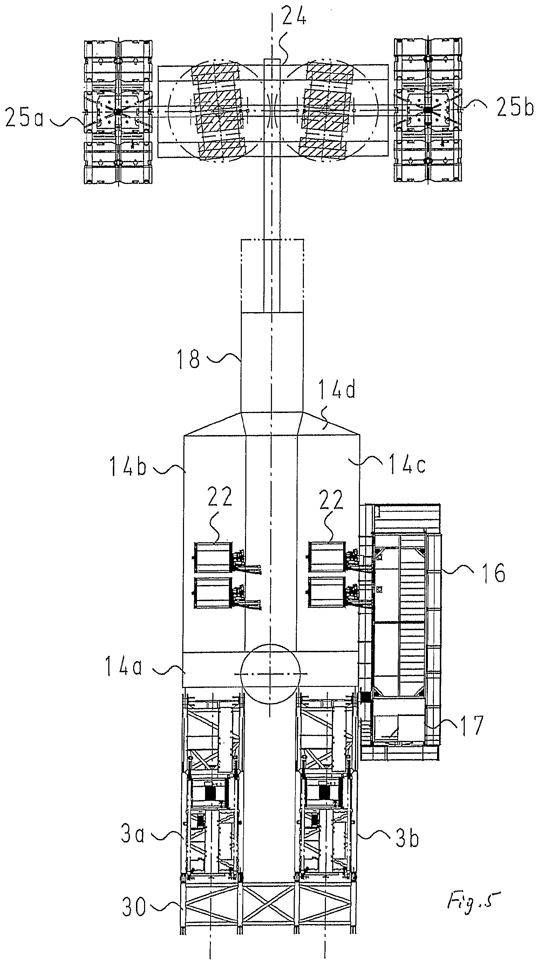

   Fig. 5 eine Teil-Draufsicht auf den Großkran,

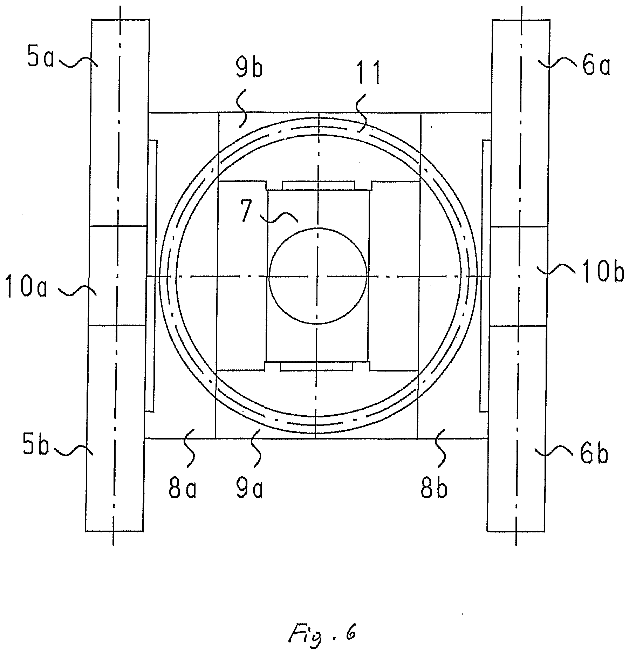

   Fig. 6 eine schematische Darstellung des Unterwagens,
   Fig. 7 einen Derrick-Kran nach dem Stand der Technik,
   Fig. 8 eine entsprechende Teil-Draufsicht,
   Fig. 9 eine schematische Darstellung des Unterwagens nach dem Stand der Technik und

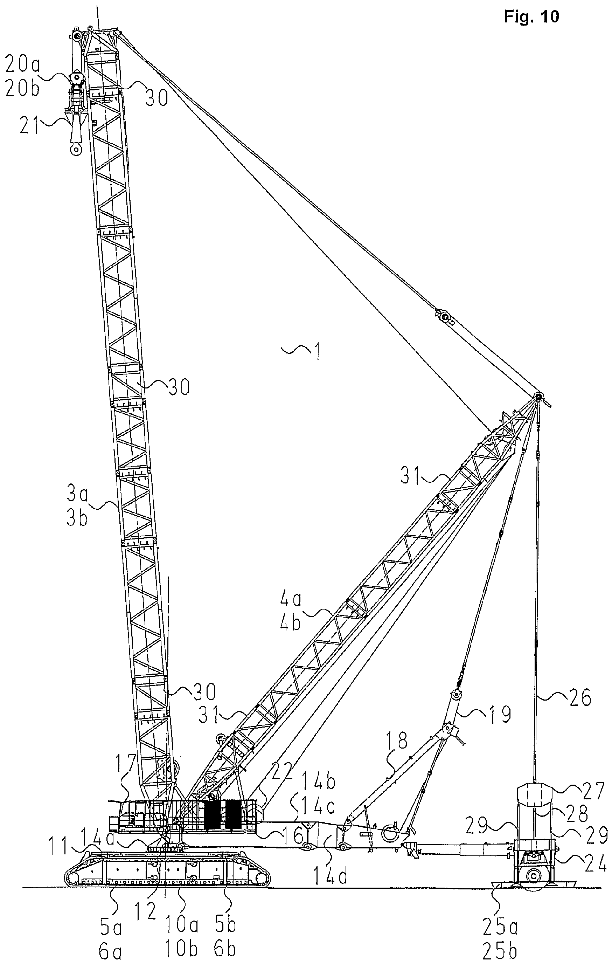

   Fig. 10 eine schematische Darstellung des erfindungsgemäßen Derrick-Krans.

Der erfindungsgemäße Großkran ist ein Gittermast-Raupenkran und arbeitet nach dem Derrick-Kran-Prinzip, d.h. das Grundgerät ist gattungsgemäß ohne Ballast ausgeführt und liefert keinen oder nur einen geringen Anteil zum Standmoment des Krans.

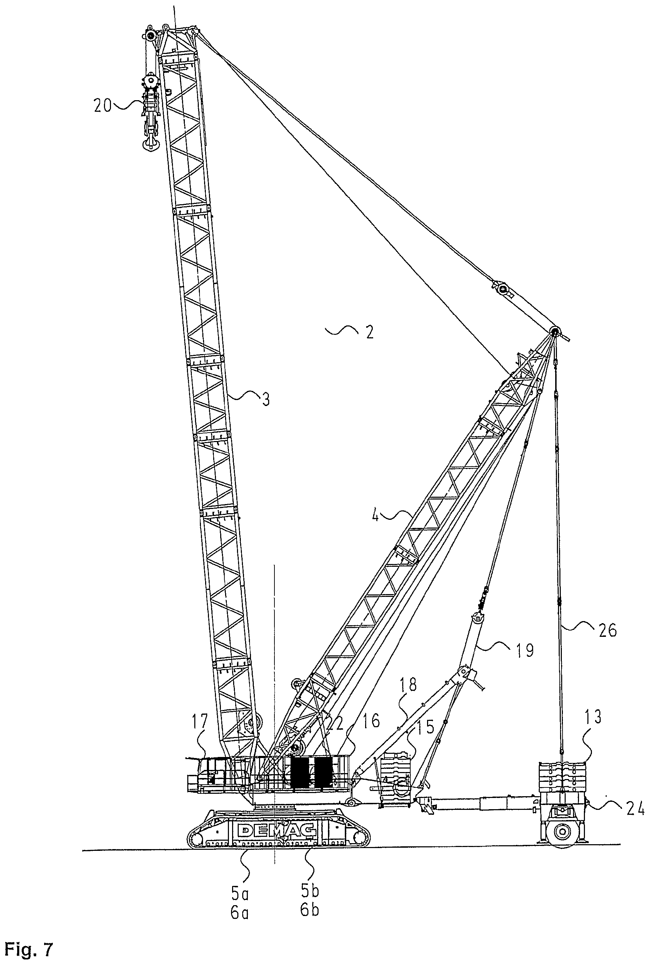

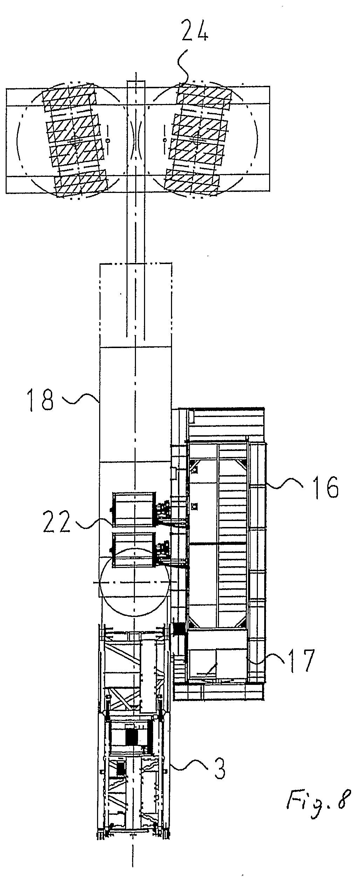

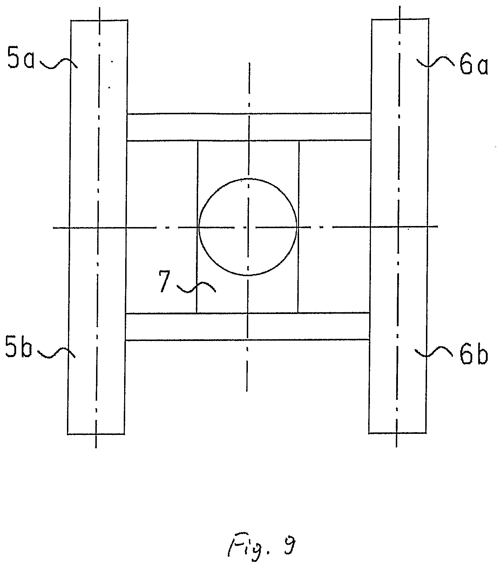

In den Figuren 7 bis 9 ist ein Derrick-Kran nach dem Stand der Technik dargestellt.

In der nachfolgenden Beschreibung wird hinsichtlich der Bezugszeichen auch auf diese bekannte Ausführung verwiesen, da die zum Verständnis wesentlichen Teile auch hieraus ersichtlich sind.

Komponenten vorhandener Serienkrane und Sonderteile, die zur Erweiterung zum Großkran zusätzlich benötigt werden.

Bei dem erfindungsgemäßen Großkran wird eine Mehrzahl von Komponenten als modulare Komponenten ausgebildet.

Hierzu wird nachfolgend beispielhaft eine Erhöhung der aufnehmbaren Traglast betrachtet:
Dabei wird der Ausleger 3 mehrfach ausgeführt und die symmetrisch angeordneten Ausleger 3a, 3b werden durch Verbindungselemente 30 miteinander vorzugsweise momentensteif verbunden. In gleicher Weise werden auch die Gegenausleger (Superliftmasten 4a, 4b) sowie die Kombinations-Unterflasche 20, 21 ausgeführt - hier jedoch momentenfrei.

Für die Lagerung der Auslegerteile wird ein entsprechend vergrößerter und erfindungsgemäß aus mehreren Teilen bestehender Kranoberwagen 14a, 14b, 14c, 14d verwendet. Bei der Ausgestaltung des Krans verwendet werden dabei die serienmäßigen Teile Antriebseinheit 16, der Steuerungsstand 17, ein Oberwagenteil 18 sowie die Hubeinrichtung 22, diese aber in mehrfacher Anzahl.

Die Einscherung des Einziehwerkes 19 ist lediglich noch zum Aufrichten des Doppelmastes notwendig und wird daher nicht verdoppelt ausgeführt. Die erfindungsgemäße Kombination der Ausleger ermöglicht Tragfähigkeiten, die im Falle kurzer Auslegerlängen annähernd verdoppelt und wegen der erzielten größeren Seitenstabilität bei langen Auslegerlängen den doppelten oder einen Wert größer als das Doppelte des einfach ausgeführten Seriengerätes betragen können.

Die erheblich vergrößerten Tragfähigkeiten verursachen eine höhere Belastung des Raupenunterwagens, der daher entsprechend neu gestaltet ist. Zur Verwendung kommen hier erfindungsgemäß ebenfalls Teile des Serienkranes in Verbindung mit Erweiterungsteilen: Die zur Reduktion des Transportgewichts bereits geteilt ausgeführten Raupenträger 5a, 5b und 6a, 6b werden durch Einfügen eines Zwischenstücks 10a, 10b verlängert. Das Mittelstück 7 kann weiterverwendet werden und die Spurweite kann durch Einfügen oder Weglassen von Zusatzteilen 8a, 8b und 9a, 9b vergrößert oder verkleinert werden.

Durch die Anordnung einer Ringbahn (11) auf dem Unterwagen, auf der mit dem Oberwagen verbundene Stützrollen (12) laufen, können nun größere Lasten abgetragen werden. Da in Lastrichtung kein oder nur ein geringes Moment auftritt müssen nur ein aus der Seitenverformung und Schrägstellung resultierendes Seitenlastmoment und die Auflast abgetragen werden. Dadurch wird eine gleichmäßigere Lastverteilung als bei marktgängigen Raupenkranen erzeugt und die vom kleineren Serienkran stammenden Raupenfahrwerke können hierdurch die größere Belastung vertragen. Die oben genannte Ringlaufbahn 11 ist als integraler Bestandteil der notwendigen Zusatzteile (8a, 8b, 9a, 9b) ausgeführt.

Für das Heben der größeren Lasten ist wegen des fehlenden Standmoments aus der Grundmaschine ein vergrößertes Gegengewicht 13 am Mast anzuordnen. Beim Drehen oder Verfahren des Kranes muss dieses Gegengewicht mitbewegt werden. Dazu werden bislang entweder Raupenfahrwerke (wie bei Lösungen der Fa. Lampson ausgeführt) oder Gegengewichtswagen auf Rädern eingesetzt. Neben der in bisheriger ingenieurmäßiger Praxis vorwiegenden Vorgehensweise, einen entsprechend vergrößerten Gegengewichtswagen zu bauen, besteht die Möglichkeit, zwei Gegengewichtswagen in einem Tandemgespann zu verwenden. Beide Lösungen sind aufwändige und teure Einzellösungen.

Im vorliegenden Fall kommt eine Mischlösung aus bestehenden verfahrbaren und bestehenden oder eigens ausgeführten, nicht verfahrbaren Gegengewichtkomponenten zum Einsatz. Diese Aufteilung ist Gegenstand des DE-Patentes (Patentanmeldung 10 2005 055 693.0).

Bei der Neuerrichtung von Anlagen, insbesondere aber bei der Modernisierung alter Anlagen durch hoch bauende Einheiten spielen sowohl der Zeitfaktor als auch der zur Verfügung stehende Platz und die Gegebenheiten am Einsatzort die entscheidende Rolle für die Durchführbarkeit einer Kranleistung. Durch den Einsatz des erfindungsgemäßen Krans ergeben sich nachstehende Vorteile:
1) Der Kran kann an einem beliebigen Ort, auch unter beengten räumlichen Verhältnissen montiert werden, die Last an einem anderen Ort aufnehmen, diese an einem beliebigen Ort absetzen und nach Einsatzende an einem beliebigen Ort demontiert werden, da er betriebsmäßig wie ein Standard-Gittermast-Raupenkran, ohne als auch mit Last, verfahren und die Last drehen und auswippen kann
2) Durch die baukastenartige Kombinationsmöglichkeit von Seriengeräte-Teilen mit nur
   wenigen Erweiterungsteilen entstehen dem Kunden mehrere technische wie kommerzielle Vorteile:
   a. Erzielung größtmöglicher Traglasten und Radien bei geringem zusätzlichen Investitionsvolumen, es müssen nur Erweiterungsteile zwischen Seriengerät und Großgerät vorgehalten werden
   b. Effektivere Nutzung der Grundinvestition, da weiterhin Kranarbeiten mit den Seriengeräten in ihren ursprünglichen Kapazitäten möglich sind (wenn Großkran nicht benötigt wird)
   c. Geringere Transportkosten, da Teile aus Seriengeräten generell kleiner als großkranadäquate Teile sind
   d. Es müssen nur die Großkran-Erweiterungsteile von einer Baustelle mit Seriengeräteeinsatz Zur nächsten Baustelle transportiert werden, um an verschiedenen Stellen innerhalb kurzer Zeit Großkrane unterschiedlicher Kapazität zu errichten.
   e. Vom Serienkran her bekannte bedienungsrelevante Elemente und Prozesse sowie Wartung und Instandhaltungsprozeduren können größtmöglich beibehalten werden
   f. Keine Sonderbevorratung von Ersatzteilen sondern Serien-Ersatzteile

## Patentansprüche

1. Mobiler Großkran mit einem Unterwagen, einer Antriebseinheit (16), einem Oberwagenteil (18), einem oder mehreren Steuerungsständen (17), mindestens zwei Auslegern (3), mindestens einem Gegenausleger (4) und mindestens zwei Hubeinrichtungen (22) sowie separat oder auf dem Grundgerät angeordneten Gegengewichten, wobei die die Traglast aufnehmenden Teile des Kranes (3, 4, 20) und die der Mobilität dienenden Teile (5, 6, 7) modular ausgebildet und Austausch- sowie durch Erweiterungsteile ergänzbar sind, wobei die zur Verwendung kommenden Baueinheiten im Wesentlichen bestehenden Serienkran-Komponenten entsprechen oder ähneln und durch deren mehrfache Anordnung im Großkran eine Tragfähigkeitssteigerung erzeugbar ist, **dadurch gekennzeichnet, dass** der Raupenunterwagen geteilt ausgeführte Raupenträger (5a, 5b und 6a, 6b) aufweist, die durch Einfügen oder Weglassen von Zwischenstücken modular (10a, 10b) verlängerbar oder verkürzbar sind,
**dass** das Mittelstück (7) und damit die Spurweite durch Einfügen oder Weglassen von Zusatzteilen (8a, 8b und 9a, 9b) vergrößerbar oder verkleinerbar ist,
**dass** am Unterwagen eine Ringbahn (11) angeordnet ist, auf der am Oberwagen angebrachte Stützrollen (12) laufen,
**dass** die Ringlaufbahn (11) integraler Bestandteil der zur Umrüstung notwendigen Zusatzteile (8a, 8b, 9a, 9b) ist.

2. Mobiler Großkran nach Anspruch 1,
**dadurch gekennzeichnet, dass** die zur Verwendung kommenden Serienkran-Komponenten in Kombination mit Sonder- oder Erweiterungsteilen Variationen von Großkranen erzeugen.

3. Mobiler Großkran nach Anspruch 1,
**dadurch gekennzeichnet, dass** auf dem Oberwagen mehrere Ausleger symmetrisch zueinander angeordnet sind, die durch Verbindungselemente (30) miteinander vorzugsweise momentensteif verbunden sind.

4. Mobiler Großkran nach Anspruch 1,
**dadurch gekennzeichnet, dass** die Gegengewichte sowohl separat wie auch auf dem Grundgerät angeordnet sind.

5. Mobiler Großkran nach einem der vorstehenden Ansprüche,
**dadurch gekennzeichnet, dass** den Auslegern Gegenausleger zugeordnet sind, die durch Verbindungselemente (31) miteinander verbunden sind.

6. Mobiler Großkran nach einem der vorstehenden Ansprüche,
**dadurch gekennzeichnet, dass** der Unterwagen als Raupenunterwagen ausgebildet ist.

7. Mobiler Großkran nach einem der vorstehenden Ansprüche,
**dadurch gekennzeichnet, dass** auf dem Oberwagen mindestens zwei Ausleger nebeneinander angeordnet und momentensteif miteinander verbunden sind, und dass diesen mindestens zwei Gegenausleger zugeordnet sind.

8. Mobiler Großkran nach einem der vorstehenden Ansprüche,
**dadurch gekennzeichnet, dass** der Unterwagen hintereinander oder versetzt angeordnete Raupenfahrwerke aufweist.

9. Mobiler Großkran nach einem der vorstehenden Ansprüche,
**dadurch gekennzeichnet, dass** die Unterflaschen (20) durch eine Verbindungstraverse (21) miteinander kombiniert werden können.

10. Mobiler Großkran gemäß einem der vorstehenden Ansprüche,
**dadurch gekennzeichnet, dass** zusätzlich zu den Stützrollen auch Halterollen oder Gleitelemente am Oberwagen vorgesehen sind.

## Claims

1. Large mobile crane comprising an undercarriage, a drive unit (16), an upper carriage part (18), one or more control stations (17), at least two jibs (3), at least one counter jib (4) and at least two lifting devices (22) and counterweights arranged separately or on the main unit, wherein the parts of the crane (3, 4, 20) bearing the load and the parts (5, 6, 7) used for mobility have a modular design and are replaceable and can be supplemented by means of expansion parts, wherein the structural units used substantially resemble or correspond to existing series-produced crane components and an increase in load-bearing capacity can be achieved by the multiple arrangement of said components in the large crane, **characterised in that** the crawler undercarriage has divided crawler carriers (5a, 5b and 6a, 6b) which can be lengthened or shortened modularly (10a, 10b) by inserting or omitting intermediate pieces,
**in that** the middle piece (7) and thus the track width can be increased or decreased in size by inserting or omitting additional parts (8a, 8b and 9a, 9b),
**in that** the undercarriage has a circular track (11) arranged thereon, on which support rollers (12) attached to the upper carriage run,
**in that** the circular running track (11) is an integral component of the additional parts (8a, 8b, 9a, 9b) required for conversion.

2. Large mobile crane as claimed in claim 1,
**characterised in that** the series-produced crane components used produce, in combination with separate or expansion parts, variations of large cranes.

3. Large mobile crane as claimed in claim 1,
**characterised in that** a plurality of jibs are arranged symmetrically with respect to one another on the upper carriage, said jibs being connected to one another by means of connecting elements (30) preferably in a torque-rigid manner.

4. Large mobile crane as claimed in claim 1,
**characterised in that** the counterweights are arranged both separately and on the main unit.

5. Large mobile crane as claimed in any one of the preceding claims, **characterised in that** the jibs are allocated counter jibs which are connected to one another by means of connecting elements (31).

6. Large mobile crane as claimed in any one of the preceding claims,
**characterised in that** the undercarriage is designed as a crawler undercarriage.

7. Large mobile crane as claimed in any one of the preceding claims, **characterised in that** at least two jibs are arranged next to one another on the upper carriage and are connected to one another in a torque-rigid manner, and **in that** said jibs are allocated at least two counter jibs.

8. Large mobile crane as claimed in any one of the preceding claims,
**characterised in that** the undercarriage has crawler-type running gear units which are arranged one behind the other or in an offset manner.

9. Large mobile crane as claimed in any one of the preceding claims, **characterised in that** the lower blocks (20) can be combined with one another by means of a connecting crosspiece (21).

10. Large mobile crane as claimed in any one of the preceding claims,
**characterised in that**, in addition to the support rollers, holding rollers or sliding elements are also provided on the upper carriage.

## Revendications

1. Grande grue mobile comprenant un châssis, une unité d'entraînement (16), une superstructure (18), un ou plusieurs postes de commande (17), au moins deux flèches (3), au moins une contre-flèche (4) et au moins deux dispositifs de levage (22) ainsi que des contrepoids disposés séparément ou sur l'unité de base, les parties de la grue (3, 4, 20) qui reçoivent la charge et les parties (5, 6, 7) qui servent à la mobilité étant conçues de façon modulaire et étant complétées par des éléments de remplacement et des éléments d'extension, les unités structurelles à utiliser correspondant ou étant sensiblement similaires à des composants de grue de série existants, et leurs différents agencements dans la grande grue permettant d'augmenter la capacité de chargement, **caractérisée en ce que**
le train de roulement à chenilles comporte des supports de chenilles (5a, 5b et 6a, 6b), réalisés en sections, qui peuvent être allongés ou raccourcis de façon modulaire par l'insertion ou le retrait de pièces intermédiaires (10a, 10b),
la pièce centrale (7) et donc l'écartement des chenilles peut être agrandie ou réduite par l'insertion ou le retrait de pièces complémentaires (8a, 8b et 9a, 9b),
une bande annulaire (11) est sur le train de roulement, bande annulaire sur laquelle roulent des rouleaux de support (12) montés sur la superstructure,
la bande annulaire (11) fait partie intégrante des pièces complémentaires (8a, 8b, 9a, 9b) nécessaires à l'adaptation.

2. Grande grue mobile selon la revendication 1, **caractérisée en ce que** les composants de grue de série à utiliser génèrent, en combinaison avec des éléments spéciaux ou d'extension, des variantes de grandes grues.

3. Grande grue mobile selon la revendication 1, **caractérisée en ce que** plusieurs flèches sont disposées symétriquement les unes aux autres sur la superstructure, lesquelles flèches sont reliées entre elles, de préférence rigidement en termes de couple, par des éléments de liaison (30).

4. Grande grue mobile selon la revendication 1, **caractérisée en ce que** les contrepoids sont disposés à la fois séparément et sur l'unité de base.

5. Grande grue mobile selon l'une des revendications précédentes, **caractérisée en ce que** les flèches sont associées à des contre-flèches qui sont reliées entre elles par des éléments de liaison (31).

6. Grande grue mobile selon l'une des revendications précédentes, **caractérisée en ce que** le train de roulement est réalisé sous la forme d'un train de roulement à chenilles.

7. Grande grue mobile selon l'une des revendications précédentes, **caractérisée en ce qu'**au moins deux flèches sont disposées côte à côte sur la superstructure et sont reliées entre elles rigidement en termes de couple et **en ce que** ces flèches sont associées à au moins deux contre-flèches.

8. Grande grue mobile selon l'une des revendications précédentes, **caractérisée en ce que** le train de roulement comporte des mécanismes de roulement à chenilles disposés les uns derrière les autres ou de façon décalée.

9. Grande grue mobile selon l'une des revendications précédentes, **caractérisée en ce que** les moufles (20) peuvent être combinés entre eux par une traverse de liaison (21).

10. Grande grue mobile selon l'une des revendications précédentes, **caractérisée en ce qu'**il est prévu, en plus des rouleaux de support, des éléments de retenue ou des éléments de glissement sur la superstructure.
